# EUROPÄISCHE PATENTSCHRIFT

(11) **EP 1 343 828 B1**
(45) Veröffentlichungstag und Bekanntmachung des Hinweises auf die Patenterteilung: **20.09.2006**
(21) Anmeldenummer: 01270560.4
(22) Anmeldetag: 11.12.2001
(51) Int. Cl.: C08F 8/00

(54) **VERFAHREN ZUR HERSTELLUNG EINER HÄRTBAREN WÄSSRIGEN POLYMERDISPERSION**
METHOD FOR PRODUCING A CURABLE AQUEOUS POLYMER DISPERSION
PROCEDE DE PRODUCTION D'UNE DISPERSION POLYMERE AQUEUSE DURCISSABLE

(30) Priorität: 12.12.2000 DE 10061726
(43) Veröffentlichungstag der Anmeldung: 17.09.2003
(73) Patentinhaber: BASF Aktiengesellschaft, 67056 Ludwigshafen (DE)
(72) Erfinder: JAWOREK, Thomas, 67169 Kallstadt (DE); BINDER, Horst, 68623 Lampertheim (DE); PAULUS, Wolfgang, 55270 Ober-Olm, Mainz (DE)
(74) Vertreter: Pohl, Michael Friedrich
(86) Internationale Anmeldenummer: PCT/EP2001/014547
(87) Internationale Veröffentlichungsnummer: WO 2002/048210

(56) Entgegenhaltungen:
- EP-A- 0 316 732
- EP-A- 0 355 892
- EP-A- 0 370 299
- EP-A- 0 554 783
- EP-A- 0 650 978
- EP-A- 0 699 724
- DE-A- 3 711 791
- DE-A- 4 021 514
- DE-A- 4 426 323
- DE-A- 19 508 530
- DE-A- 19 626 839
- DE-A- 19 653 631
- FR-A- 2 757 866
- GB-A- 2 219 591
- US-A- 3 919 126

## Beschreibung

Die vorliegende Erfindung betrifft ein Verfahren zur Herstellung einer härtbaren wässrigen Polymerdispersion, die nach diesem Verfahren erhältliche Polymerdispersion, ein Beschichtungsmittel enthaltend wenigstens eine solche Polymerdispersion und ein Verfahren zur Herstellung eines beschichteten Substrats unter Einsatz einer solchen Polymerdispersion.

Strahlungshärtbare Lacke, zum Beispiel auf Basis von Polyester- und Polyetheracrylaten und -methacrylaten haben eine große technische Bedeutung erlangt und breite Anwendung gefunden. Auf Grund ihrer Vernetzbarkeit eigenen sie sich vor allem zur Herstellung strahlungshärtbarer Überzugsmassen, z. B. von Lack-Formulierungen, welche durch aktinische Strahlung schnell gehärtet werden können. Sie kommen sowohl zur Beschichtung von nicht saugenden Substraten, wie Metallen, Kunststoffen und Glas, als auch von saugenden Substraten, wie Holz, Papier und Leder, zum Einsatz. Um eine Belastung der Umwelt durch Lösungsmittelemissionen zu vermeiden und entsprechenden Rechtsvorschriften zu genügen, werden zunehmend strahlungshärtbare Lack-Formulierungen auf Basis von Polymerdispersionen eingesetzt, bei denen das Dispergiermittel einen möglichst hohen Wassergehalt aufweist. An Beschichtungsmittel für Außenanwendungen werden zusätzliche Anforderungen gestellt. So sollen sie z. B. eine gute Stabilität gegen Witterungseinflüsse, und insbesondere gegenüber UV-Strahlung aufweisen. Für Außenanwendungen werden derzeit im Wesentlichen Urethanacrylatdispersionen eingesetzt. Nachteilig an diesen Dispersionen sind ihre hohen Gestehungskosten, durch die sie wirtschaftlich benachteiligt sind.

Es ist bekannt, zur Herstellung von Beschichtungsmitteln Polymerisate auf Basis von Vinylmonomeren einzusetzen, die eine relativ enge Molekulargewichtsverteilung (Polydispersitätswerte M_{w}/Mₙ < 5,0) und relativ niedrige Molekulargewichte (Mₙ zwischen 1000 und 10 000) aufweisen.

Die EP-A-0 554 783 beschreibt ein Verfahren zur kontinuierlichen Polymerisation von Vinylmonomeren unter Bildung von Vinylpolymeren mit einem zahlenmittleren Molekulargewicht Mₙ im Bereich von 1000 bis 20 000 und einem Polydispersitätswert M_{w}/Mₙ < 3,5, wobei die Polymerisation in einem Ringspaltreaktor durchgeführt wird. Diese Vinylpolymere enthalten keine eingebauten ethylenisch ungesättigten Doppelbindungen und sind somit nicht durch sogenannte "Selbstvernetzung" radikalisch vernetzbar. Sie eignen sich im Allgemeinen auch nicht zur Herstellung von Polymerdispersionen auf Basis wasserhaltiger Dispergiermittel.

Die EP-A-0 650 978 beschreibt radikalisch vernetzbare Copolymerisate mit einem zahlenmittleren Molekulargewicht im Bereich von 1500 bis 6000 und einer Polydispersität von 1 bis 4,0, die durch eine polymeranaloge Umsetzung eines Vinylpolymers mit einer verbindung erhältlich sind, durch die ethylenisch ungesättigte Doppelbindungen in das Polymer eingeführt werden. Die EP-A-0 650 979 beschreibt ein Verfahren zur Herstellung solcher radikalisch vernetzbarer Copolymerisate, wobei die polymeranaloge Umsetzung in einem Extruder erfolgt. Diese Copolymerisate sind auf Grund ihres Molekulargewichts hochviskos bzw. fest. Sie eignen sich daher vorzugsweise für eine Anwendung als Bindemittel für die Pulverlackbeschichtung. Zubereitungen dieser copolymere in Form von Lösungen und Dispersionen sind zwar ganz allgemein beschrieben. Für einen Einsatz in stabilen, wasserhaltigen Dispersionen sind diese Copolymere jedoch noch verbesserungswürdig.

Die EP-A-0 370 299 beschreibt ein wässriges Beschichtungsmittel auf der Grundlage von Polyacrylatharzen, die lufttrocknende; ungesättigte Fettsäurereste und quartäre Ammoniumgruppen eingebaut enthalten, ein verfahren zu ihrer Herstellung durch Umsetzung von Epoxidgruppen aufweisenden Polyacrylaten mit trocknenden Fettsäuren und Ammoniumsalzen auf Basis von tertiären Monoaminen, anschließendes Lösen der Umsetzungsprodukte in Wasser und Zugabe der aus der Lacktechnologie bekannten Hilfs- und Zusatzmittel, sowie die Verwendung der Beschichtungsmittel zur Beschichtung von Holz oder von Holzwerkstoffen.

Die EP-A-0 316 732 hat einen der EP-A-0 370 299 vergleichbaren Offenbarungsgehalt, wobei zur Herstellung der Beschichtungmittel anstelle von tertiären Monoaminen sekundäre Monoamine eingesetzt werden.

Der vorliegenden Erfindung liegt die Aufgabe zu Grunde, ein Verfahren zur Herstellung von radikalisch vernetzbaren (härtbaren) Polymerdispersionen zur Verfügung zu stellen. Die nach diesem Verfahren erhaltenen Dispersionen sollen auch mit wässrigen Dispergiermitteln stabil sein. Vorzugsweise soll dabei auf den Einsatz von teuren Urethanacrylaten verzichtet werden können. Insbesondere sollen sich diese Dispersionen als Beschichtungsmittel oder Beschichtungsmittelkomponente zur Beschichtung einer Vielzahl unterschiedlicher Substrate eignen. Bei einer Anwendung im Außenbereich sollen sie sich vorzugsweise durch eine gute Stabilität gegen witterungseinflüsse, insbesondere gegen UV-Strahlung, auszeichnen.

Überraschenderweise wurde nun gefunden, daß diese Aufgabe durch ein Verfahren zur Herstellung einer härtbaren Polymerdispersion gelöst wird, wobei man ein (Meth)acrylatcopolymer mit ethylenisch ungesättigten Doppelbindungen in einer polymeranalogen Umsetzung zusätzlich mit ionogenen bzw. ionischen Gruppen modifiziert und anschließend, gegebenenfalls nach einer Neutralisation und/oder Quaternisierung, dispergiert.

Gegenstand der vorliegenden Erfindung ist Verfahren zur Herstellung einer härtbaren wässrigen Polymerdispersion durch
I) Herstellung eines (Meth)acrylatcopolymers A) mit einem zahlenmittleren Molekulargewicht Mₙ im Bereich von 1400 bis 10 000 und einer Polydispersität von 1 bis 5,0, das ethylenisch ungesättigte Gruppen und funktionelle Gruppen trägt, die zu einer Kondensations- oder Additionsreaktion befähigt sind, durch radikalische Polymerisation eines Monomerengemischs, umfassend wenigstens ein Monomer a1) mit einem Rest der Formel

   CH₂ = C(R)-C(=O)-

   mit R = H oder CH₃ und vorzugsweise wenigstens ein von a1) verschiedenes radikalisch polymerisierbares Monomer a2), wobei wenigstens eines der Monomere a1) und/oder a2) eine funktionelle Gruppe trägt, die zu einer Kondensations- oder Additionsreaktion befähigt ist, zu einem Copolymerisat Ai) und anschließende polymeranaloge Umsetzung des Copolymerisats Ai) mit wenigstens einer ethylenisch ungesättigten Verbindung C), die zusätzlich wenigstens eine zu den zur Kondensations- oder Additionsreaktion befähigten funktionellen Gruppen der Monomere a1) und/oder a2) komplementäre funktionelle Gruppe trägt, wobei als komplementäres Paar aus Vinylverbindung C) und Monomeren a1) und/oder a2) Glycidylacrylat oder Glycidylmethacrylat mit Acrylsäure oder Methacrylsäure eingesetzt wird,
   polymeranaloge Umsetzung des (Meth)acrylatcopolymers A), mit wenigstens einer Verbindung B), die ausgewählt ist unter Carbonsäureanhydriden,
   zu einem Copolymerisat AI), das ethylenisch ungesättigte Gruppen und ionogene und/oder ionische Gruppen trägt,
II) falls vorhanden, Überführen wenigstens eines Teils der ionogenen Gruppen des Copolymerisats AI) in ionische Gruppen und
III)Dispergieren des Copolymerisats AI) in einem Dispergiermittel.

Die Vorsilben "(Meth)acryl" bezeichnen im Rahmen dieser Erfindung Verbindungen, die gleichermaßen von Acrylsäure und Methacrylsäure abgeleitet sein können.

### Schritt I)

Unter einem (Meth)acrylatcopolymer (Komponente A) wird im Rahmen der vorliegenden Erfindung ein Polymer verstanden, das wenigstens ein ethylenisch ungesättigtes Monomer einpolymerisiert enthält, das ein Strukturelement der Formel

CH₂ = C(R)-C(=O)-

mit R = H oder CH₃ aufweist.

Die erfindungsgemäß eingesetzten (Meth)acrylatcopolymere A) weisen vorzugsweise ein Polymerrückgrat aus einpolymerisierten Vinylmonomeren auf, an das zur Härtung befähigte ethylenisch ungesättigte Doppelbindungen und weitere, davon verschiedene, funktionelle Gruppen gebunden sind, die zu einer Kondensations- oder Additionsreaktion befähigt sind.

Vorzugsweise weist das Polymerrückgrat der Copolymere A) keine Urethan- oder Harnstoffgruppen auf.

Bevorzugt wird in Schritt I) ein Copolymer A) eingesetzt, das ein zahlenmittleres Molekulargewicht im Bereich von etwa 1500 bis 6000 aufweist.

Die Polydispersität M_{w}/Mₙ, das heisst, der Quotient aus dem gewichtsmittleren und dem zahlenmittleren Molekulargewicht der Copolymere A) beträgt vorzugsweise höchstens 4,5, insbesondere höchstens 3,5, und hat im Idealfall einen wert von höchstens 3. Vorliegend beziehen sich die Polydispersitäten sowie die gewichtsmittleren und zahlenmittleren Molekulargewichte auf gelpermeationschromatographische Messungen, wobei Polystyrol als Standard verwendet wurde. Eine solche Methode ist im Analytiker-Taschenbuch Band 4, Seiten 433-442, Berlin 1984, beschrieben.

"Polymeranaloge Reaktion" bedeutet im Rahmen der vorliegenden Erfindung eine Reaktion unter Einbeziehung von funktionellen Gruppen des Macromoleküls (z. B. der Komponente A bzw. im Folgenden der Komponente Ai). Bei diesen funktionellen Gruppen handelt es sich um von ethylenisch ungesättigten Gruppen verschiedene Gruppen. Vorzugsweise handelt es sich um funktionelle Gruppen, die unter den Bedingungen der radikalischen Polymerisation inert sind. Die erfindungsgemäß in schritt I) eingesetzten Copolymere A) weisen funktionelle (reaktive) Gruppen auf, die mit den funktionellen Gruppen der Verbindungen B) unter Ausbildung einer chemischen Bindung im Sinne einer Kondensations- oder Additionsreaktion reagieren können. Dazu werden die Copolymere A) mit solchen Verbindungen B) umgesetzt, deren funktionelle Gruppen sich zu denen des copolymers komplementär verhalten. Als "komplementäre funktionelle Gruppen" wird im Rahmen der vorliegenden Erfindung ein Paar von funktionellen Gruppen verstanden, die in einer Kondensations- oder Additionsreaktion miteinander reagieren können. "Komplementäre Verbindungen" sind Paare von Verbindungen, die zueinander komplementäre funktionelle Gruppen aufweisen.

Erfindungsgemäß ist die Verbindung B) ausgewählt unter Carbonsäureanhydriden. Dazu zählen ganz allgemein aliphatische, cycloaliphatische, und aromatische Carbonsäureanhydride.

Vorzugsweise ist die Verbindung B) ausgewählt unter aliphatischen Carbonsäureanhydriden, besonders bevorzugt unter Glutarsäureanhydrid, Bernsteinsäureanhydrid und Mischungen davon. Insbesondere wird als Verbindung B) Bernsteinsäureanhydrid eingesetzt.

Die polymeranaloge Umsetzung zwischen dem Copolymer A) und der Verbindung B) erfolgt unter den für Kondensations- bzw. Additionsreaktionen üblichen und dem Fachmann bekannten Bedingungen.

Bei Kondensationsreaktionen, wie z. B. der Esterbildung, ist es üblich, das bei der Kondensation austretende Produkt aus dem Reaktionsansatz zu entfernen. Geeignete Reaktionsweisen und Apparaturen, wie z. B. der Einsatz von Azeotropen bildenden Schleppmitteln, wasserabscheidern, etc., sind dem Fachmann bekannt.

Bei der Umsetzung von Isocyanatgruppen mit gegenüber Isocyanatgruppen reaktiven Gruppen ist es in der Regel vorteilhaft, in der Schmelze oder in Gegenwart eines wasserfreien Lösungsmittels zu arbeiten. Zur Beschleunigung dieser Additionsreaktion können bekannte Katalysatoren eingesetzt werden.

Als Katalysatoren kommen allgemein alle diejenigen in Betracht, die üblicherweise zur Beschleunigung der Reaktion zwischen den komplementären Gruppen eingesetzt werden. Für das Reaktionspaar Epoxid/Carbonsäure sind beispielsweise Phosphine wie Triphenylphosphin sowie Amine wie Dimethylbenzylamin, Dimethylethanolamin und Tributylamin sowie Tetraalkylammoniumhalogenide, und für das Reaktionspaar Isocyanat/Alkohol sind beispielsweise Organo-zinnVerbindungen geeignet, wie z. B. Dibutylzinndilaurat, zinn-(II)-octoat, etc.

Das Verhältnis von funktionellen Gruppen des (Meth)acrylatcopolymers A) zu den funktionellen Gruppen der Verbindung B) beträgt vorzugsweise 0,7:1 bis 1,3:1, bevorzugt 0,8:1 bis 1,2:1, und ganz besonders bevorzugt etwa 1:1.

Gegebenenfalls im Überschuss eingesetzte oder nicht abreagierte Verbindungen B) können durch übliche dem Fachmann bekannte Verfahren, wie z. B. durch Entgasung, entfernt werden.

Gegebenenfalls kann den Copolymeren A) vor der polymeranalogen Umsetzung wenigstens ein Inhibitor zugesetzt werden, um eine thermische Vernetzung zu vermeiden. Inhibitoren werden üblicherweise in Mengen von 1 bis 5000 ppm, bevorzugt von 1 bis 1000 ppm, eingesetzt. Geeignete Inhibitoren sind z. B. Phenothiazine, sterisch gehinderte o-Phenole oder Halbether des Hydrochinons.

Wird zur polymeranalogen Umsetzung ein Lösungsmittel eingesetzt, so handelt es sich vorzugsweise um ein unter den Reaktionsbedingungen inertes, mit Wasser mischbares Lösungsmittel, z. B. ein Keton, wie Aceton oder Methylethylketon, Tetrahydrofuran, N-Methylpyrrolidon, etc. Wird zur Reaktion ein im Wesentlichen nicht wassermischbares Lösungsmittel eingesetzt, so wird dieses vorzugsweise vor der Dispergierung entfernt oder gegen ein mit Wasser mischbares Lösungsmittel ausgetauscht.

Die Reaktionstemperatur bei der polymeranalogen Umsetzung des Copolymers A) mit der Verbindung B) liegt vorzugsweise in einem Bereich von 50 bis 150°C, besonders bevorzugt 60 bis 140°C.

Die Herstellung der erfindungsgemäß in Schritt I) eingesetzten (Meth)acrylatcopolymere A) erfolgt durch radikalische Polymerisation eines Monomergemischs unter Polymerisationsbedingungen, bei denen Copolymerisate mit dem gewünschten zahlenmittleren Molekulargewicht und der gewünschten Polydispersität resultieren, gegebenenfalls gefolgt von einer Umsetzung einer Einführung von ethylenisch ungesättigten Gruppen in das Copolymer.

Die Bildung von Copolymerisaten A mit geringer Polydispersität und niedrigem Molekulargewicht erfolgt vorzugsweise bei Reaktionstemperaturen in einem Bereich von etwa 140 bis 210°C, besonders bevorzugt 150 bis 180°C, und insbesondere 150 bis 170°C. Die Reaktionszeiten liegen vorzugsweise in einem Bereich von etwa 2 bis 90 min, besonders bevorzugt 5 bis 50 min, und insbesondere 5 bis 25 min, wie z. B. 10 bis 15 min.

Beim Einsatz von Monomeren und/oder Lösungsmitteln, deren Siedepunkte unterhalb der Reaktionstemperatur liegen, erfolgt die Reaktion zweckmäßigerweise unter Druck, vorzugsweise unter dem Eigendruck des Systems bei den jeweiligen Reaktionsbedingungen. In der Regel sind höhere Drücke als 30 bar nicht erforderlich.

Geeignete Reaktoren zur Einhaltung der zuvor genannten Reaktionsbedingungen sind dem Fachmann bekannt. Dazu zählen z. B. Rührreaktoren, bei denen eine rasche Durchmischung der Ausgangsprodukte unter Wärmeabfuhr gewährleistet ist. Bevorzugt erfolgt die Polymerisation zur Herstellung der erfindungsgemäß eingesetzten Methacrylatcopolymere A) in einem Ringspaltreaktor, insbesondere in einem Ringspalt-Dünnschicht-Reaktor mit Rückführungseinrichtung oder einem Taylor-Reaktor. Vorteilhafterweise ist in einem solchen Reaktor wegen des günstigen Verhältnisses von Wärmeaustauschfläche zu Reaktionsvolumen eine Durchführung der exothermen Polymerisation unter weitgehend isothermen Bedingungen möglich.

Copolymerisationen in Ringspalt-Reaktoren sind allgemein bekannt und können z. B. in einem mit Rotor ausgestatteten Rohrreaktor ausgeführt werden. Sie sind vorzugsweise mit einer Vorrichtung zur Rückführung eines Teils des Produkts an den Reaktoreintritt ausgestattet. Es können jedoch auch andere Polymerisationsapparaturen, wie z. B. Rührkessel, eingesetzt werden, sofern für eine ausreichende Wärmeabfuhr gesorgt wird. Geeignete Copolymerisationen in Ringspalt-Dünnschicht-Reaktoren sind z. B. in der EP-A-0 554 783 beschrieben, worauf hier Bezug genommen wird.

Die Herstellung der erfindungsgemäß in Schritt I) eingesetzten (Meth)acrylatcopolymere A) kann z. B. in Substanz oder in Lösung erfolgen. Bevorzugt ist die Herstellung ohne Lösungsmittel. Geeignete Lösungsmittel sind allgemein gegenüber den Reaktionspartnern unter den Reaktionsbedingungen inerte Flüssigkeiten, z. B. Ether wie Ethylenglykolether und Ethylendiglykolether, Ester wie Butylacetat, Ketone wie Methylamylketon, Alkylaromaten, wie Toluol, die isomeren Xylole und Cumol, aliphatische Alkohole, wie Isopropanol, etc. Vorteilhafterweise werden als Lösungsmittel die Alkylaromaten und insbesondere Cumol und m-Xylol, eingesetzt. Vorteilhafterweise werden wassermischbare Lösungsmittel eingesetzt, die sich als Dispergiermittelkomponente zum Dispergieren des Copolymerisats AI) in Schritt III) eignen. Nach einer bevorzugten Ausführungsform wird bei der Herstellung der Copolymere A) der Umsatz der Polymerisationsreaktion auf etwa 50 bis 95 mol-%, vorzugsweise 80 bis 95 mol-%, begrenzt, um eine möglichst enge Molekulargewichtsverteilung zu erzielen. Nicht umgesetzte Monomere, flüchtige Oligomere und gegebenenfalls das Lösungsmittel können im Anschluss an die Polymerisation nach üblichen dem Fachmann bekannten Trennverfahren vom Reaktionsgemisch abgetrennt und zweckmäßigerweise wieder in die Polymerisation zurückgeführt werden.

Als Initiatoren für die radikalische Polymerisation eignen sich radikalbildende Verbindungen, wie z. B. Peroxo- oder Azoverbindungen. Vorzugsweise liegt deren Zerfallstemperatur in einem Bereich von 140 bis 200°C. Geeignete Polymerisationsinitiatoren sind z. B. tert.-Butylperoxisobutyrat, Methylisobutylketonperoxid, Dicumylperoxid, tert.-Butylcumylperoxid, Di-tert.-butylperoxid, Cumylhydroperoxid, tert.-Butylper-2-ethylhexanoat, Di-tert.-butylperoxid, 2,5-Dimethyl-2,5-di(tert.-butylperoxy)hexan, Dibenzoylperoxid, aliphatische und cycloaliphatische Azoverbindungen, z. B. 2,2'-Azobis(isobutyronitril), etc. Die verwendete Initiatormenge, bezogen auf die Monomere, liegt im Allgemeinen in einem Bereich von etwa 0,3 bis 10, bevorzugt 0,5 bis 2 Gew.-%.

Erfindungsgemäß wird in Schritt I) ein (Meth)acrylatcopolymer A) eingesetzt, das wenigstens ein Monomer a1) mit einem Rest der Formel

CH₂ = C(R)-C(=0)-

mit R = H oder CH₃ einpolymerisiert enthält. Zusätzlich enthalten die Copolymere A) vorzugsweise wenigstens ein von a1) verschiedenes radikalisch polymerisierbares Monomer a2) einpolymerisiert. Zur Einführung von ethylenisch ungesättigten (härtbaren) Doppelbindungen in das Copolymerisat A) trägt wenigstens eines der Monomere a1) und/oder a2) eine funktionelle Gruppe, die zu einer Kondensations- oder Additionsreaktion befähigt ist. Über derartige funktionelle Gruppen, die nicht für die Einführung von ethylenisch ungesättigten (härtbaren) Doppelbindungen in das Copolymerisat A) verbraucht werden, können anschließend dann die ionogenen oder ionischen Gruppen in das Copolymerisat A) eingeführt werden. Vorzugsweise erfolgt somit die Herstellung des (Meth)acrylatcopolymers A) durch radikalische Polymerisation eines Monomergemischs, umfassend Monomere, die eine funktionelle Gruppe tragen, die zu einer Kondensations- oder Additionsreaktion befähigt ist, zu einem Copolymerisat Ai), und anschließende polymeranaloge Umsetzung des Copolymerisats Ai) mit wenigstens einer ethylenisch ungesättigten Verbindung C), die zusätzlich wenigstens eine zu den zur Kondensations- oder Additionsreaktion befähigten funktionellen Gruppen der Monomere a1) und/oder a2) komplementäre funktionelle Gruppe trägt.

Vorzugsweise enthält das Copolymerisat Ai)
- 20 bis 85 Mol-% wenigstens eines Monomers a1) und
- 15 bis 80 Mol-% wenigstens eines von a1) verschiedenen radikalisch polymerisierbaren Monomeren a2)
einpolymerisiert, wobei, bezogen auf die Gesamtmenge der Monomeren a1) und a2), 5 bis 50 mol-% der Monomeren a1) und/oder a2) eine funktionelle Gruppe tragen, die zu einer Kondensations- oder Additionsreaktion befähigt ist.

Geeignete Monomere a1) ohne eine zu einer Kondensations- oder Additionsreaktion befähigte funktionelle Gruppen sind z. B. die Ester der Acrylsäure und Methacrylsäure mit C₁-C₃₀-Alkoholen sowie die Amide der Acrylsäure und Methacrylsäure mit Mono- und Di-C₁-C₃₀-Alkylaminen. Dazu zählen z. B. die C₁-C₁₂-Alkylester der (Meth)acrylsäure, wie Methylacrylat, Ethylacrylat, n-Propylacrylat, Isopropylacrylat, n-Butylacrylat, Isobutylacrylat, tert.-Butylacrylat, n-Hexylacrylat, 2-Ethylhexylacrylat, Methylmethacrylat, Ethylmethacrylat, n-Propylmethacrylat, Isopropylmethacrylat, n-Butylmethacrylat, tert.-Butylmethacrylat, n-Hexylmethacrylat, 2-Ethylhexylmethacrylat, etc. Bevorzugt sind Methylacrylat und Methylmethacrylat. Geeignete Monomere a1) sind weiterhin Alkoxyalkyl(meth)acrylate, wie Methoxyethyl(meth)acrylat, Cycloalkyl(meth)acrylate, wie Cyclohexyl(meth)acrylat, Aryl(meth)acrylate, und Arylalkyl(meth)acrylate, wie Benzyl(meth)acrylat.

Bevorzugte Monomere a2) ohne eine zu einer Kondensations- oder Additionsreaktion befähigte funktionelle Gruppe sind die Ester α, β-ethylenisch ungesättigter, von (Meth)acrylsäure verschiedener Mono- und/oder Dicarbonsäuren mit C₁-C₃₀-Alkoholen. Besonders bevorzugt sind die C₁-C₁₂-Alkylester der Crotonsäure, Fumarsäure, Itaconsäure und Maleinsäure.

Geeignete Monomere a2) sind weiterhin Vinylaromaten, bevorzugt Styrol, 1-Methylstyrol, 4-tert.-Butylstyrol und 2-Chlorstyrol.

Geeignete Monomere a2) sind weiterhin die Ester von Vinylalkohol oder Allylalkohol mit C₁-C₃₀-Monocarbonsäuren, vorzugsweise die Vinylether von C₂-C₂₀-Fettsäuren, wie Vinylacetat, Vinylpropionat, Vinyl-n-butyrat, Vinylstearat, Vinyllaurat, etc. Geeignet sind weiterhin Vinylhalogenide und Vinylidenhalogenide, wie Vinylchlorid und Vinylidenchlorid. Geeignet sind weiterhin C₂-C₈-Monoolefine, wie Ethen, konjugierte Diene wie Butadien und Isopren, Vinylether von C₁- bis C₂₀-Alkanolen, wie Methyl-, Ethyl-, n-Butyl-, Isobutyl-, tert.-Butyl-, Dodecylvinylether, etc.

Geeignete Monomere a2) sind weiterhin heterocyclische Vinylverbindungen, wie 2-Vinylpyridin und N-Vinylpyrrolidon.

Geeignete Monomere a1), die eine zur Kondensations- oder Additionsreaktion befähigte funktionelle Gruppe tragen, weisen neben einem Rest der Formel

CH₂ = C(R)-C(=O)-

mit R = H oder CH₃ wenigstens eine funktionelle Gruppe auf, die vorzugsweise ausgewählt ist unter den selben funktionellen Gruppen, die, wie zuvor beschrieben, zur Modifizierung des Copolymers A) mit ionogenen oder ionischen Gruppen durch polymeranaloge Umsetzung mit einer Verbindung B) zum Einsatz kommen. Bevorzugt funktionelle Gruppen dieser Monomere a1) sind die HydroxylGruppe, die Amino-Gruppe, die Carbonsäure-Gruppe, die Carbonsäureester-Gruppe, die Carbonsäureamid-Gruppe, die Isocyanat-Gruppe, die Carbonyl-Gruppe in Aldehyd- oder Ketonfunktion, und die Epoxid-Gruppe. Besonders bevorzugt sind die Carboxyl-Gruppe und die Epoxid-Gruppe.

Bevorzugte Monomere a1), die eine zur Kondensations- oder Additionsreaktion befähigte funktionelle Gruppe tragen, sind ausgewählt unter den Estern der Acrylsäure und Methacrylsäure mit C₂-C₃₀-Alkandiolen, insbesondere 2-Hydroxyethylacrylat und 2-Hydroxyethylmethacrylat, den Amiden der Methacrylsäure mit C₂-C₃₀-Aminoalkoholen, insbesondere 2-Aminoethylacrylat und 2-Aminoethylmethacrylat, (Meth)acrolein, (Meth)acrylamid, (Meth)acrylsäure, Glycidyl(meth)acrylat und Mischungen davon.

Bevorzugte Monomere a2), die eine zur Kondensations- oder Additionsreaktion befähigte funktionelle Gruppe tragen, sind ausgewählt unter den Estern α,β-ethylenisch ungesättigter, von Acrylsäure und Methacrylsäure verschiedener Mono- und Dicarbonsäuren mit C₂-C₃₀-Alkandiolen, den Amiden α,β-ethylenisch ungesättigter, von Acrylsäure und Methacrylsäure verschiedener Mono- und Dicarbonsäuren mit C₂-C₃₀-Aminoalkoholen sowie Allylalkohol, Vinylethylketon, Vinylisocyanat, Dimethyl-3-isopropenylbenzylisocyanat (TMI) und 4-Isocyanatostyrol, von Acrylsäure und Methacrylsäure verschiedenen α,β-ethylenisch ungesättigten Mono-und/oder Dicarbonsäuren und deren Halbestern und Anhydriden, wie Fumarsäure, Maleinsäure, Itaconsäure, Crotonsäure, Maleinsäureanhydrid, Monobutylmaleat, und Mischungen davon.

Vorzugsweise enthalten die copolymere Ai) 20 bis 85 mol-%, besonders bevorzugt 40 bis 85 mol-%, und insbesondere 60 bis 80 mol-%, wenigstens eines Monomers a1) und 15 bis 80 mol-%, bevorzugt 15 bis 60 mol-%, und insbesondere 20 bis 40 mol-%, wenigstens eines Monomers a2) eingebaut. Der Anteil der Monomere a1 und/oder a2), die eine zur Kondensations- oder Additionsreaktion befähigte funktionelle Gruppe tragen, beträgt vorzugsweise 5 bis 50 mol-%, besonders bevorzugt 15 bis 40 mol-%, und insbesondere 20 bis 35 mol-%.

Gewünschtenfalls können die copolymerisate Ai) im Anschluss an ihre Herstellung nach üblichen, dem Fachmann bekannten verfahren, von Lösungsmitteln und/oder von überschüssigen Monomeren befreit werden. Dazu zählt z. B. die Destillation bei vermindertem Druck oder das Durchleiten von Stickstoff durch eine Schmelze der Copolymerisate. Besonders geeignet ist ein kontinuierlich betriebener, in Reihe geschalteter Dünnschichtverdampfer, in dem das Copolymerisat entgast wird. Die Entgasungstemperatur liegt vorzugsweise in einem Bereich von 160-220°C.

Zur Herstellung der (Meth)acrylatcopolymere A) können die Copolymerisate Ai) in einer polymeranalogen Umsetzung mit wenigstens einer ethylenisch ungesättigten Verbindung C) derivatisiert werden. Wie zuvor bereits für die polymeranaloge Umsetzung des Copolymers A) mit der Verbindung B) beschrieben, werden die Copolymerisate Ai) mit solchen funktionellen Vinylverbindungen C) umgesetzt, deren funktionelle Gruppen sich zu denen des Polymerisates Ai) komplementär verhalten. Die Umsetzung zwischen dem Copolymerisat Ai) und der Verbindung C) erfolgt dabei im Wesentlichen zwischen den komplementären funktionellen Gruppen, und nicht zwischen den ethylenisch ungesättigten Doppelbindungen der Komponenten. Geeignete Verbindungen C) sind prinzipiell die zuvor genannten Monomere a1) und a2) mit zu einer Kondensations- oder Additionsreaktion befähigten funktionellen Gruppen. Aus der Gruppe der Vinylverbindungen C) und der Monomere a1) und/oder a2) wird als komplementäres Paar Glycidylacrylat oder Glycidylmethacrylat mit Acrylsäure oder Methacrylsäure eingesetzt.

Geeignete Katalysatoren für die Kondensations- oder Additionsreaktion sind die zuvor bei der polymeranalogen Umsetzung des Copolymers A) mit der Verbindung B) genannten.

Das Verhältnis an funktionellen Gruppen des Copolymerisats Ai) zu den funktionellen Vinylmonomeren C) liegt vorzugsweise in einem Bereich von etwa 0,7:1 bis 1,3:1, besonders bevorzugt 0,8:1 bis 1,2:1, und insbesondere etwa 1:1.

Gewünschtensfalls können bei der polymeranalogen Umsetzung die zuvor genannten Inhibitoren in den ebenfalls zuvor genannten Mengen eingesetzt werden.

Besonders bevorzugt erfolgt die polymeranaloge Umsetzung in einem Extruder, wie z. B. in einem selbstreinigenden Mehrschneckenextruder.

Erfindungsgemäß einsetzbare (Meth)acrylatcopolymere A) sowie Verfahren zu ihrer Herstellung werden in der EP-A-0650978 und der EP-A-0650979 beschrieben, worauf hier in vollem Umfang Bezug genommen wird.

### Schritt II)

Weisen die in Schritt I) erhaltenen Copolymerisate AI) Säuregruppen als anionogene Gruppen auf, so können diese durch Umsetzung mit einer Base teilweise oder vollständig neutralisiert werden. Als Base für die Neutralisation der Polymere können Alkalimetallbasen, wie Natronlauge, Kalilauge, Soda, Natriumhydrogencarbonat, Kaliumcarbonat oder Kaliumhydrogencarbonat und Erdalkalimetallbasen, wie Calciumhydroxid, Calciumoxid, Magnesiumhydroxid oder Magnesiumcarbonat sowie Ammoniak und Amine verwendet werden. Falls die in Schritt I) erhaltenen Copolymerisate AI) Amingruppen als kationogene Gruppen aufweisen, so können diese entweder durch Protonierung, z. B. mit carbonsäuren, wie Milchsäure, oder Mineralsäuren, wie Phosphorsäure, Schwefelsäure und Salzsäure, oder durch Quaternisierung, z. B. mit Alkylierungsmitteln, wie C₁-, C₄-Alkylhalogeniden oder -sulfaten, in kationische Gruppen überführt werden. Beispiele von Alkylierungsmitteln sind Ethylchlorid, Ethylbromid, Methylchlorid, Methylbromid, Dimethylsulfat und Diethylsulfat. Die Überführung von ionogenen in ionische Gruppen kann teilweise oder vollständig, d. h. zu 100 Mol-%, erfolgen.

### Schritt III)

Als Dispergiermittel werden vorzugsweise Wasser oder Gemische aus Wasser und wenigstens einem wassermischbaren Lösungsmittel eingesetzt. Wird bei der Herstellung der Copolymerisate AI) ein nicht wassermischbares organisches Lösungsmittel eingesetzt, so kann dieses im Anschluss an die Herstellung durch übliche, dem Fachmann bekannte Verfahren, z. B. durch Destillation bei vermindertem Druck, entfernt werden. Vor dem Abtrennen des Lösungsmittels kann dem Copolymerisat zusätzlich Wasser und/oder ein wassermischbares Lösungsmittel zugegeben werden. Die erfindungsgemäßen Dispergiermittel weisen vorzugsweise einen Wassergehalt von mindestens 50 Gew.-%, besonders bevorzugt mindestens 70 Gew.-%, und insbesondere mindestens 90 Gew.-%, bezogen auf die gesamte Dispergiermittelmenge, auf. Besonders bevorzugt werden reine wässrige Dispersionen eingesetzt. Enthalten die Dispergiermittel wenigstens ein wassermischbares Lösungsmittel, so ist dies vorzugsweise ausgewählt unter Alkanolen, wie Methanol, Ethanol, Propanol, Isopropanol, n-Butanol, tert.-Butanol, Ketonen, wie Aceton und Methylethylketon, cyclischen Ethern, wie Tetrahydrofuran, und Mischungen davon.

Ein weiterer Gegenstand der Erfindung ist eine Polymerdispersion, die durch das zuvor beschriebene Verfahren erhältlich ist. Die erfindungsgemäßen Polymerdispersionen eignen sich in vorteilhafter Weise als Beschichtungsmittel oder als Beschichtungsmittelkomponente.

Ein weiterer Gegenstand der Erfindung ist ein Beschichtungsmittel, enthaltend:
- wenigstens eine erfindungsgemäße Polymerdispersion,
- gegebenenfalls wenigstens ein weiteres Oligomer oder Polymer mit wenigstens einer ethylenisch ungesättigten Doppelbindungen,
- gegebenenfalls wenigstens einen Zusatzstoff.

Das erfindungsgemäße Beschichtungsmittel kann als Verbindung mit wenigstens einer ethylenisch ungesättigten Doppelbindungen einen oder mehrere sogenannte Reaktivverdünner enthalten. Reaktivverdünner sind niedermolekulare, flüssige Verbindungen, die wenigstens eine, polymerisierbare, ethylenisch ungesättigte Doppelbindung aufweisen. Eine Übersicht über Reaktivverdünner findet man z. B. in J. P. Fouassier (Hrsg.), Radiation Curing in Polymer Science and Technology, Elsevier Science Publisher Ltd., 1993, Vol. 1, p 237-240. Bevorzugt werden Reaktivverdünner auf Basis von Estern der Acrylsäure bzw. der Methacrylsäure mit aliphatischen Di- oder Polyolen, wobei wenigstens zwei der OH-Gruppen der Di- oder Polyole mit Acrylsäure bzw. Methacrylsäure verestert sind. Geeignete aliphatische Di- oder Polyole weisen in der Regel 2 bis 20 Kohlenstoffatome auf und können ein lineares, verzweigtes oder cyclisches Kohlenstoffgerüst haben. Sie enthalten vorzugsweise keine funktionellen Gruppen. Abgesehen von ein oder zwei Ethersauerstoffen weisen sie vorzugsweise keine Heteroatome auf. Beispiele für derartige Reaktivverdünner sind Butandioldiacrylat, Hexandioldiacrylat, Octandioldiacrylat, Dekandioldiacrylat, Cyclohexandioldiacrylat, Trimethylolpropantriacrylat, Pentaerythrittetraacrylat, Dipentaerythrit-penta/hexaacrylat, Dipropylenglykoldiacrylat sowie die entsprechenden Ester der Methacrylsäure und die unter den Laromer® -Marken der BASF AG verkauften Produkte LR 8887, PO 33F, LR 8967, LR 8982.

Daneben kann das erfindungsgemäße Beschichtungsmittel weitere Reaktivverdünner enthalten, die von den vorgenannten verschieden sind. Derartige Reaktivverdünner sind ebenfalls mono-, di- oder polyungesättigte Verbindungen. Sie dienen üblicherweise zur Beeinflussung der Viskosität und der lacktechnischen Eigenschaften, wie beispielsweise der Vernetzungsdichte. Beispiele für derartige Verbindungen sind (Meth)Acrylsäure und deren C₁-C₁₀-Alkylester, Maleinsäure und deren C₁-C₁₀-Alkylester bzw. Halbester, Vinylacetat, Vinylether, Divinylharnstoffe, Polyethylenglykol-di(meth)acrylat, Vinyl(meth)acrylat, Allyl(meth)acrylat, Styrol, Vinyltoluol, Divinylbenzol, Tris(acryloyloxymethyl)isocyanurat, Ethoxyethoxyethyl-acrylat, N-Vinylpyrrolidon, Phenoxyethylacrylat, Dimethylamino-ethylacrylat, Hydroxyethyl(meth)acrylat, Butoxyethylacrylat, Isobornyl(meth)acrylat, Dimethylacrylamid und Dicyclopentylacrylat, sowie die in der EP 0 250 631 A1 beschriebenen, langkettigen linearen Diacrylate mit einem Molekulargewicht von 400 bis 4.000, bevorzugt von 600 bis 2.500 Dalton. Einsetzbar ist außerdem das Umsetzungsprodukt von 2 Molen Acrylsäure mit einem Mol eines Dimerfettalkohols, der im Allgemeinen 36 Kohlenstoffatome aufweist. Geeignet sind auch Gemische der genannten Monomeren.

Die erfindungsgemäßen Beschichtungsmittel können als Zusatzstoff in der Regel 0,1 bis 5 Gew.-%, bevorzugt 0,1 bis 2 Gew.-%, insbesondere 0,2 bis 1 Gew.-% wenigstens eines Photoinitiators enthalten, der die Polymerisation ethylenisch ungesättigter Doppelbindungen initiieren kann. Hierzu zählen Benzophenon und Benzophenonderivate, wie 4-Phenylbenzophenon und 4-Chlorobenzophenon, Michelers Keton, Anthron, Acetophenonderivate, wie 1-Benzoylcyclohexan-1-ol, 2-Hydroxy-2,2-dimethylacetophenon und 2,2-Dimethoxy-2-phenylacetophenon, Benzoin und Benzoinether, wie Methyl-, Ethyl- und Butylbenzoinether, Benzilketale, wie Benzildimethylketal, 2-Methyl-1-(4-methyl-thio-phenyl)-2-morpholinopropan-1-on, Anthrachinon und seine Derivate, wie β-Methylanthrachinon und tert.-Butylanthrachinon, Acylphospinoxide, wie 2,4,6-Trimethylbenzoyldiphenylphosphinoxid, Ethyl-2,4,6-trimethylbenzoylphenylphosphinat und Bisacylphosphinoxide. Derartige Initiatoren sind beispielsweise die im Handel unter den Marken Irgacure® 184, Darocure® 1173 der Firma Ciba Geigy, Genocure® der Firma Rahn oder Lucirin® TPO der Firma BASF AG erhältlichen Produkte.

Ferner können die erfindungsgemäßen Beschichtungsmittel je nach Verwendungszweck bis zu 35 Gew.-% übliche Hilfsmittel, wie Verdicker, verlaufshilfsmittel, Entschäumer, UV-Stabilisatoren, Gleitmittel und Füllstoffe enthalten. Geeignete Hilfsmittel sind dem Fachmann hinreichend aus der Lack-Beschichtungs-Technologie bekannt. Geeignete Füllstoffe umfassen Silikate, z. B. durch Hydrolyse von Siliciumtetrachlorid erhältliche Silikate, wie Aerosil® der Fa. Degussa, Kieselerde, Talkum, Aluminiumsilikate, Magnesiumsilikate, Calciumcarbonate etc. Geeig-nete Stabilisatoren umfassen typische UV-Absorber, wie Oxanilide, Triazine und Benzotriazol (letztere erhältlich als Tinuvin® -Marken der Ciba-Spezialitätenchemie) und Benzophenone. Diese können alleine oder zusammen mit geeigneten Radikalfängern, beispielsweise sterisch gehinderten Aminen, wie 2,2,6,6,-Tetramethylpiperidin, 2,6-Di-tert.-butylpiperidin oder deren Derivate, z. B.
Bis-(2,2,6,6-tetramethyl-4-piperidyl)sebacinat eingesetzt werden. Stabilisatoren werden üblicherweise in Mengen von 0,1 bis 5,0 Gew.-% und vorzugsweise 0,5 bis 3,5 Gew.-%, bezogen auf das Beschichtungsmittel, eingesetzt.

Ein weiterer Gegenstand der Erfindung ist ein Verfahren zur Herstellung eines beschichteten Substrats, wobei man
- eine erfindungsgemäße Polymerdispersion oder ein erfindungsgemäßes Beschichtungsmittel auf die Oberfläche des Substrats aufträgt,
- die aufgetragene Polymerdispersion bei erhöhten Temperaturen trocknet, und
- die getrocknete Polymerdispersion durch Bestrahlung mit UV- oder Elektronenstrahlen härtet.

Die erfindungsgemäßen Beschichtungsmittel eignen sich für die Beschichtung einer Vielzahl von Substratoberflächen wie insbesondere aus Metall, Holz, Kunststoff, Papier oder Leder. Ein weiterer Gegenstand der Erfindung sind auch die beschichteten Substrate, die durch das zuvor beschriebene Beschichtungsverfahren erhältlich sind. Gegenstand der Erfindung ist weiterhin auch die Verwendung der erfindungsgemäßen Polymerdispersionen in oder als Beschichtungsmittel(n).

Die Härtung der erfindungsgemäßen Beschichtungsmittel erfolgt durch Bestrahlung mit aktinischer Strahlung, wie Elektronenstrahlen oder UV-Strahlen. Nach einer geeigneten Ausführungsform erfolgt die Härtung durch Bestrahlung bei Raumtemperatur. Nach einer bevorzugten Ausführungsform erfolgt die Härtung bei Temperaturen im Bereich von 20 bis 170°C, insbesondere 40 bis 130°C. Nach einer weiteren bevorzugten Ausführungsform erfolgt die Strahlungshärtung unter Inertgasatmosphäre, z. B. unter Stickstoff. Die durch Härten der erfindungsgemäßen Beschichtungsmittel erhaltenen Beschichtungen weisen gute anwendungstechnische Eigenschaften, wie z. B. Pendelhärten, Bleistift-härten und Erichsen-Tiefungswerte, auf. Dies gilt vorzugsweise, wenn die Strahlungshärtung bei erhöhten Temperaturen erfolgt. Überraschenderweise werden in der Regel sehr gute Beschichtungen erhalten, wenn zur Einführung von ionischen Gruppen in die erfindungsgemäß eingesetzten Copolymere ein aliphatisches Carbonsäureanhydrid, speziell Bernsteinsäureanhydrid, eingesetzt wurde.

Die Erfindung wird anhand der folgenden, nicht einschränkenden Beispiele näher erläutert.

### Experimentelle Methoden:

### Viskosität:

Die Bestimmung der Viskosität erfolgte mit einem Rotationsviskosimeter nach DIN 53019.

### Teilchengröße:

Teilchengröße erfolgte über Lichtstreuung an einem Gerät der Firma Malvern.

### Feststoffgehalt:

Der Feststoffgehalt wurde durch Bestimmung des Masseverlustes beim Eintrocknen der Dispersion bei 120°C für eine Stunde bestimmt.

### pH-Wert:

Die Bestimmung des pH-Wertes erfolgte unter Verwendung einer pH-Elektrode nach DIN 19261, ISO 787.

### Glasübergangstemperatur:

Die Bestimmung der Glasübergangstemperatur erfolgte durch DSC-Messung (differential scanning calorimetry).

### I. Herstellung von Methacrylatcopolymeren und polymeranaloge Umsetzung mit Acrylsäure

### Beispiel 1:

Eine Mischung aus 85% Methylmethacrylat, 5% Methylacrylat und 10% Glycidyl-methacrylat wurde in einem Ringspaltreaktor bei 200°C polymerisiert. Als Initiator wurde Di-tert.Amylperoxid eingesetzt. Die Initiatorkonzentration betrug 1,5%.Amylperoxid. Nach der Polymerisation folgte ein Entgasungsprozess der Schmelze bei 200°C und einem Druck von ca. 40 mbar. Das so erhaltene Polymer hatte ein Molekulargewicht von Mn = 3000 g/mol. In einer Glasapparatur wurden 2000 g dieses Epoxidharzes in 667 g Xylol gelöst und anschließend mit 0,5% Tetrabutylammoniumbromid versetzt. Bei einer Temperatur von 130°C erfolgte die Zugabe von 365 g Acrylsäure. Der Reaktionsansatz wurde nachgerührt, bis ein Umsatz der Epoxidgruppen von ca. 95% erreicht war. Die überschüssige Acrylsäure und das Lösungsmittel wurden in einem Extruder bei einer Temperatur von 130°C und einem Vakuum von < 100 mbar entfernt. Nach der Umsetzung wurde ein Molekulargewicht von Mn = 3000 g/mol gemessen. Der Tg-Wert (Glasübergangstemperatur) lag bei 52°C.

### Beispiel 2:

Eine Mischung aus 25% Styrol, 47% Methylmethacrylat und 28% Glycidylmethacrylat wurde in einem Ringspaltreaktor bei 190°C polymerisiert. (Initiator = 1,5% Di-tert. Amylperoxid). Nach der Polymerisation wurde die Schmelze bei 190°C und einem Druck von ca. 40 mbar entgast.

Das so erhaltene Polymer wies die folgenden Eigenschaften auf:
Molekulargewicht: Mn = 2939 g/mol
Polydispersität: 2,54
Tg: 57°C
Viskosität bei 120°C: 850 Pas.

In einer Glasapparatur wurden 2400 g dieses Epoxidharzes in 800 g Xylol gelöst und mit 1,5% Triphenylphosphin versetzt. Bei einer Temperatur von 130°C erfolgte die Zugabe von 590 g Acrylsäure. Es wurde bis zu einem Umsatz der Epoxidgruppen von ca. 97% nachgerührt. Nach der Funktionalisierung und Entgasung im Extruder zeigte das Polymer nachstehende Eigenschaften:
Molekulargewicht: Mn = 3550 g/mol,
Tg: 44°C.

### Beispiel 3:

Eine Mischung aus 23% Glycidylmethacrylat, 9% n-Butylacrylat, 47% Methylmethacrylat, 7% Methylacrylat und 14% Styrol wurde in einem Ringspaltreaktor in Gegenwart von 3,0% Di-tert.Amylperoxid bei 190°C polymerisiert, und anschließend bei 190°C und einem Druck von ca. 40 mbar entgast.

Das so erhaltene Polymer wies die folgenden Eigenschaften auf:
Molekulargewicht: Mn = 2400 g/mol
Polydispersität: 2,1
Tg: 29°C.

Dieses Epoxidpolymer wurde grob gemahlen, mit 1,5 % Tetrabutylammoniumbromid versetzt und in einem Extruder (ZSK 30 der Firma Werner und Pfleiderer) mit Acrylsäure bei 130°C umgesetzt. In einem weiteren Entgasungsextruder (ZSK 30 der Firma Werner und Pfleiderer) erfolgte die Entfernung der überschüssigen Acrylsäure bei einer Temperatur von 130°C und einem Druck < 100 mbar. Nach der Entgasung wurde das Polymer filtriert (40 µm Kerzenfilter).

Das so erhaltene Polymer wies die folgenden Eigenschaften auf:
Umsatz der Epoxidgruppen: 98 %
Molekulargewicht: Mn = 2500 g/mol
Feststoffgehalt: 99 %
Restsäurezahl: ca. 8 mg KOH/g Polymer

Das Polymer war in Xylol (50%-ige Lösung) klar löslich.

### II. Herstellung der Dispersionen

### Beispiel A

| | |
|---|---|
| Ansatz: | 0,28 mol Polymer aus Beispiel 1 |
| | 0,28 mol Bernsteinsäureanhydrid |
| | 31,7% Methylethylketon |

| | |
|---|---|
| Zulauf 1: | 24,0% Aceton |
| Zulauf 2: | 10% Hexandioldiacrylat |
| Zulauf 3: | 0,375 mol NaOH |
| Zulauf 4: | 60% H₂O |

Man ließ den Ansatz 4 Stunden bei 80°C reagieren. Anschließend wurde mit Zulauf 1 verdünnt und danach Zulauf 2 eingerührt. Dann wurde mit Zulauf 3 neutralisiert und mit Zulauf 4 dispergiert. Anschließend wurde das organische Lösungsmittel im Vakuum abdestilliert.

Die so erhaltene Dispersion wies die folgenden Eigenschaften auf:
Fg: 27,2%
pH: 8,64
TG: 52,7 nm
Viskosität: 132 mPas

### Beispiel B

| | |
|---|---|
| Ansatz: | 0,399 Mol Polymer aus Beispiel 2 |
| | 0,133 Mol Bernsteinsäureanhydrid |
| | 31,9% Methylethylketon |

| | |
|---|---|
| Zulauf 1: | 24,2% Aceton |
| Zulauf 2: | 15% Hexandioldiacrylat |
| Zulauf 3: | 0,133 Mol NaOH |
| Zulauf 4: | 60% H₂O |

Man ließ den Ansatz 4 Stunden bei 80°C reagieren. Anschließend wurde mit Zulauf 1 verdünnt und danach Zulauf 2 eingerührt. Danach wurde mit Zulauf 3 neutralisiert und mit Zulauf 4 dispergiert. Anschließend wurde das organische Lösungsmittel im Vakuum abdestilliert.

Die so erhaltene Dispersion wies die folgenden Eigenschaften auf:
FG: 25,5%
pH: 7,71
TG: 185,6 nm
Viskosität: 323 mPas

### Beispiel C

| | |
|---|---|
| Ansatz: | 0,324 Mol Polymer aus Beispiel 3 |
| | 0,324 Mol Glutarsäureanhydrid |
| | 29,7% Methylethylketon |

| | |
|---|---|
| Zulauf 1: | 22,9% Aceton |
| Zulauf 2: | 15% Hexandioldiacrylat |
| Zulauf 3: | 0,324 Mol NaOH |
| Zulauf 4: | 60% H₂O |

Man ließ den Ansatz 4 Stunden bei 80°C reagieren. Anschließend mit Zulauf 1 verdünnt und danach Zulauf 2 eingerührt. Dann wurde mit Zulauf 3 neutralisiert und mit Zulauf 4 dispergiert. Anschließend wurde das organische Lösungsmittel im Vakuum abdestilliert.

Die so erhaltene Dispersion wies die folgenden Eigenschaften auf:
FG: 27,7%
pH: 7,02
TG: 188,9
Viskosität: 37,7 mPas

### III. Anwendungstechnische Eigenschaften

Herstellung der Lacke:
Dabei bedeuten alle Teile Gewichtsteile, sofern nicht ausdrücklich etwas anderes angegeben wird.
Aus den in den Ausführungsbeispielen angegebenen Komponenten wurden, sofern nicht ausdrücklich etwas anderes angegeben wurde, unter intensivem Rühren die Beschichtungsmittel hergestellt.
Filmhärtung:
Mit den in den Ausführungsbeispielen beschriebenen Beschichtungsmitteln wurden mit einem Kastenrakel, Spaltgröße 200 µm, Filme auf gereinigten Glasplatten hergestellt. Die Filme wurden sodann bei 80°C für 30 Minuten getrocknet und, wenn nicht anders angegeben, auf Raumtemperatur abgekühlt. Die Aushärtung der Filme erfolgte an einer IST-Beschichtungsanlage mit 2 UV-Strahlern und einer Förderband-Laufgeschwindigkeit von 10 m/min. Die Strahlendosis betrug ca. 1800 mJ/cm².
Filmprüfung:
Pendelhärte
   Die Bestimmung der mechanischen Beständigkeit der unter verschiedenen Sauerstoffgehalten gehärteten Beschichtungen erfolgte durch Pendelhärte nach König, DIN 53157, ISO 1522, nach 24-stündiger Lagerung im Klimaraum.
Bleistifthärte
   Die Bestimmung der Bleistifthärte erfolgte an Beschichtungen, die für 24 Stunden im Klimaraum gelagert wurden. Bleistifte unterschiedlicher Härtegrade wurden unter konstantem Druck und mit einem Winkel von 30-45° über den Prüfkörper geführt. Wenn - bei zunehmend härteren Bleistiften - ein sichtbarer Eindruck hinterblieb, wurde die Bezeichnung des Bleistiftes als Härtewert ("Bleistifthärte") angegeben. Die Härteskala der Bleistifte stieg in der Reihenfolge 6B-B, HB, F, H, 2H - 9H an.
Erichsen-Tiefung
   Die Elastizität bzw. Verformung der Filme wurde auf Normblechen nach DIN 53156, ISO 1520, durchgeführt, jeweils nach Lagerung der Filme für 24 Stunden im Klimaraum.

Filmdaten:

| Beispiele | RT*) | 100°C*) | 100°C N²*) | 150°C*) | 150°C N²*) |
|---|---|---|---|---|---|
| | | | | | |
| A | 130 | 137 | | | |
| | 1,9 | 2,2 | | | |
| | - | H | | | |
| | | | | | |
| B | 154 | 188 | 185 | 179 | 203 |
| | 0,9 | 3,2 | 1,1 | 0,7 | 0,5 |
| | 3B | 2B | 2H | 2B | 2H |
| | | | | | |
| C | 70 | 104 | 118 | 107 | 87 |
| | 7,2 | 1,5 | 1,0 | 0,9 | 0,5 |
| | | | | | |
| | | | | | |

| | | | | | |
|---|---|---|---|---|---|
| PH: Pendelhärte; ET: Erichsen Tiefung; BH: Bleistifthärte RT: Raumtemperatur *) Reaktionsbedingungen während der Strahlenhärtung; als Photoinitiator wurde jeweils 4 % Irgacure 500 (Ciba) zugegeben. | | | | | |

## Patentansprüche

1. verfahren zur Herstellung einer härtbaren wässrigen Polymerdispersion durch
I) Herstellung eines (Meth)acrylatcopolymers A) mit einem zahlenmittleren Molekulargewicht Mₙ im Bereich von 1400 bis 10 000 und einer polydispersität von 1 bis 5,0, das ethylenisch ungesättigte Gruppen und funktionelle Gruppen trägt, die zu einer Kondensations- oder Additionsreaktion befähigt sind, durch radikalische Polymerisation eines Monomerengemischs, umfassend wenigstens ein Monomer a1) mit einem Rest der Formel
CH₂ = C(R)-C(=O)-
mit R = H oder CH₃ und vorzugsweise wenigstens ein von a1) verschiedenes radikalisch polymerisierbares Monomer a2), wobei wenigstens eines der Monomere a1) und/oder a2) eine funktionelle Gruppe trägt, die zu einer Kondensations- oder Additionsreaktion befähigt ist, zu einem Copolymerisat Ai) und anschließende polymeranaloge Umsetzung des Copolymerisats Ai) mit wenigstens einer ethylenisch ungesättigten Verbindung C), die zusätzlich wenigstens eine zu den zur Kondensations- oder Additionsreaktion befähigten funktionellen Gruppen der Monomere a1) und/oder a2) komplementäre funktionelle Gruppe trägt, wobei als komplementäres Paar aus Vinylverbindung c) und Monomeren a1) und/oder a2) Glycidylacrylat oder Glycidylmethacrylat mit Acrylsäure oder Methacrylsäure eingesetzt wird,
polymeranaloge Umsetzung des (Meth)acrylatcopolymers A), mit wenigstens einer Verbindung B), die ausgewählt ist unter Carbonsäureanhydriden,
zu einem Copolymerisat AI), das ethylenisch ungesättigte Gruppen und ionogene und/oder ionische Gruppen trägt,
II) falls vorhanden, Überführen wenigstens eines Teils der ionogenen Gruppen des Copolymerisats AI) in ionische Gruppen und
III) Dispergieren des Copolymerisats AI) in einem Dispergiermittel.

2. Verfahren nach Anspruch 1, wobei das in Schritt I) eingesetzte (Meth)acrylatcopolymer A) ein zahlenmittleres Molekulargewicht im Bereich von 1500 bis 6000 aufweist.

3. Verfahren nach Anspruch 1, wobei die Verbindung B) ausgewählt ist unter Glutarsäureanhydrid, Bernsteinsäureanhydrid und Mischungen davon.

4. verfahren nach einem der vorhergehenden Ansprüche, wobei in Schritt I) ein (Meth)acrylatcopolymer eingesetzt wird, welches wenigstens ein Monomer a1) mit einem Rest der Formel
CH₂=C(R)-C(=O)-
mit R = H oder CH₃ und das eine zu einer Kondensations- oder Additionsreaktion befähigte funktionelle Gruppe trägt, einpolymerisiert enthält, wobei das Monomer a1) ausgewählt ist unter den Estern der Acrylsäure und Methacrylsäure mit C₂-C₃₀-Alkandiolen, den Amiden der Methacrylsäure mit C₂-C₃₀-Aminoalkoholen, (Meth)acrolein, (Meth)acrylamid, (Meth)acrylsäure, Glycidyl(meth)acrylat und Mischungen davon.

5. Verfahren nach einem der vorhergehenden Ansprüche, wobei das in Schritt I) eingesetzte (Meth)acrylatcopolymer A) erhältlich ist durch
i) radikalische Polymerisation eines Monomergemischs, umfassend
a1) 20 bis 85 Mol-% wenigstens eines Monomeren mit einem Rest der Formel
CH₂ = C(R)-C(=O)-
worin R für H oder CH₃ steht,
a2) 15 bis 80 Mol-% wenigstens eines von a1) verschiedenen radikalisch polymerisierbaren Monomeren,
wobei, bezogen auf die Gesamtmenge der Monomeren a1) und a2), 5 bis 50 Mol-% der Monomeren a1) und/oder a2) eine funktionelle Gruppe tragen, die zu einer Kondensations- oder Additionsreaktion befähigt ist, zu einem Copolymerisat Ai),
ii) polymeranaloge umsetzung des Copolymerisats Ai) mit wenigstens einer ethylenisch ungesättigten Verbindung C), die zusätzlich wenigstens eine zu den zur Kondensations- oder Additionsreaktion befähigten funktionellen Gruppen der Monomere a1) und/oder a2) komplementäre funktionelle Gruppe trägt, zu einem (Meth)acrylatcopolymer A).

6. Verfahren nach Anspruch 1, wobei die Polymerisation in Schritt i) in einem Ringspaltreaktor durchgeführt wird.

7. Durch Bestrahlung mit aktinischer Strahlung härtbare Polymerdispersion, erhältlich durch ein verfahren nach einem der Ansprüche 1 bis 6.

8. Durch Bestrahlung mit aktinischer Strahlung härtbares Beschichtungsmittel, enthaltend:
- wenigstens eine Polymerdispersion nach Anspruch 7,
- gegebenenfalls wenigstens ein weiteres Oligomer oder Polymer mit wenigstens einer ethylenisch ungesättigten Doppelbindung,
- gegebenenfalls wenigstens einen Zusatzstoff.

9. Beschichtungsmittel nach Anspruch 8, enthaltend als Zusatzstoff 0,1 bis 5 Gew.-% wenigstens eines Photoinitiators, der die Polymerisation ethylenisch ungesättigter Doppelbindungen initiieren kann.

10. Verfahren zur Herstellung eines beschichteten Substrats, wobei man
- eine Polymerdispersion nach Anspruch 7 oder ein Beschichtungsmittel nach Anspruch 8 auf die Oberfläche des Substrats aufträgt,
- die aufgetragene Polymerdispersion bei erhöhten Temperaturen trocknet, und
- die getrocknete Polymerdispersion durch Bestrahlung mit UV- oder Elektronenstrahlen härtet.

11. Verfahren nach Anspruch 10, wobei man ein Substrat mit einer Oberfläche aus Metall, Holz, Kunststoff, Papier oder Leder einsetzt.

12. Beschichtetes Substrat, erhältlich durch ein verfahren nach einem der Ansprüche 10 oder 11.

13. Verwendung der Polymerdispersion nach Anspruch 7 in oder als Beschichtungsmittel(n).

## Claims

1. A process for preparing a curable aqueous polymer dispersion by
I) preparing a (meth)acrylate copolymer A) having a number-average molecular weight Mₙ in the range from 1400 to 10 000 and a polydispersity of from 1 to 5.0, said copolymer A) carrying ethylenically unsaturated groups and functional groups capable of a condensation or addition reaction, by free-radical polymerization of a monomer mixture comprising at least one monomer a1) containing a radical of the formula
CH₂ = C(R)-C(=O)-
where R is H or CH₃ and preferably at least one free-radically polymerizable monomer a2), which is different from a1), at least one of the monomers a1) and/or a2) carrying a functional group which is capable of a condensation reaction or addition reaction, to give a copolymer Ai) and subsequently polymer-analogously reacting the copolymer Ai) with at least one ethylenically unsaturated compound C) which additionally carries at least one functional group complementary to the functional groups capable of condensation reaction or addition reaction of the monomers a1) and/or a2), using as a complementary pair composed of vinyl compound C) and monomers a1) and/or a2) glycidyl acrylate or glycidyl methacrylate with acrylic acid or methacrylic acid,
polymer-analogously reacting the (meth)acrylate copolymer A) with at leat one compound B) selected from carboxylic anhydrides,
to give a copolymer AI) which carries ethylenically unsaturated groups and ionogenic and/or ionic groups,
II) where present, converting at least some of the ionogenic groups of the copolymer AI) into ionic groups, and
III)dispersing the copolymer AI) in a dispersion medium.

2. The process according to claim 1, wherein the (meth)acrylate copolymer A) used in step I) has a number-average molecular weight in the range from 1500 to 6000.

3. The process according to claim 1, wherein the compound B) is selected from glutaric anhydride, succinic anhydride and mixtures thereof.

4. The process according to any of the preceding claims, wherein a (meth)acrylate copolymer is used in step I) that comprises in copolymerized form at least one monomer a1) containing a radical of the formula
CH₂=C(R)-C(=O)-
where R is H or CH₃ and that carries a functional group capable of a condensation reaction or addition reaction, the monomer a1) being selected from the esters of acrylic acid and methacrylic acid with C₂-C₃₀ alkanediols, the amides of methacrylic acid with C₂-C₃₀ amino alcohols, (meth)acrolein, (meth)acrylamide, (meth) acrylic acid, glycidyl (meth)acrylate, and mixtures thereof.

5. The process according to any of the preceding claims, wherein the (meth)acrylate copolymer A) used in step I) is obtainable by
i) free-radically polymerizing a monomer mixture comprising
a1) from 20 to 85 mol% of at least one monomer containing a radical of the formula
CH₂ = C(R)-C(=O)-
where R is H or CH₃ and
a2) from 15 to 80 mol% of at least one free-radically polymerizable monomer other than a1),
from 5 to 50 mol% of the monomers a1) and/or a2), based on the overall amount of the monomers a1) and a2), carrying a functional group capable of a condensation or addition reaction, to give a copolymer Ai),
ii) polymer-analogously reacting the copolymer Ai) with at least one ethylenically unsaturated compound C) which additionally carries at least one functional group complementary to the functional groups of the monomers a1) and/or a2) that are capable of condensation or addition reaction, to give a (meth)acrylate copolymer A).

6. The process according to claim 1, wherein the polymerization in step i) is conducted in an annular reactor.

7. A polymer dispersion curable by irradiation with actinic radiation and obtainable by a process according to any of claims 1 to 6.

8. A coating composition curable by irradiation with actinic radiation and comprising:
- at least one polymer dispersion according to claim 7,
- if appropriate, at least one further oligomer or polymer containing at least one ethylenically unsaturated double bond,
- if appropriate, at least one additive.

9. The coating composition according to claim 8, comprising as additive from 0.1 to 5% by weight of at least one photoinitiator which can initiate the polymerization of ethylenically unsaturated double bonds.

10. A process for producing a coated substrate, which comprises
- applying a polymer dispersion according to claim 7 or a coating composition according to claim 8 to the surface of the substrate,
- drying the applied polymer dispersion at elevated temperatures, and
- curing the dried polymer dispersion by irradiation with UV or electron beams.

11. The process according to claim 10, wherein a substrate with a surface made of metal, wood, plastic, paper or leather is used.

12. A coated substrate obtainable by a process according to either of claims 10 and 11.

13. The use of a polymer dispersion according to claim 7 in or as a coating composition.

## Revendications

1. Procédé pour la préparation d'une dispersion polymère aqueuse durcissable par :
I) préparation d'un copolymère de (méth)acrylate A) avec un poids moléculaire à moyenne pondérée Mₙ dans le domaine de 1400 à 10 000 et une polydispersité de 1 à 5,0, qui porte des groupes éthyléniquement insaturés et des groupes fonctionnels qui sont capables d'une réaction de condensation ou d'addition, par polymérisation radicalaire d'un mélange de monomères comprenant au moins un monomère a1) avec un radical de la formule
CH₂ = C(R)-C(=O)-
où R = H ou CH₃ et préférentiellement au moins un monomère a2) radicalement polymérisable différent de a1) au moins un des monomères a1) et/ou a2) portant un groupe fonctionnel qui est capable d'une réaction de condensation ou d'addition, pour donner un copolymérisat Ai), puis transformation, de manière analogue aux polymères du copolymérisat Ai) avec au moins un composé éthyléniquement insaturé C), qui porte en outre au moins un groupe fonctionnel complémentaire aux groupes fonctionnels capables d'une réaction de condensation ou d'addition des monomères a1) et/ou a2), de l'acrylate glycidylique ou du méthacrylate glycidylique avec de l'acide acrylique ou de l'acide méthacrylique étant mis en oeuvre comme paire complémentaire constituée d'un composé vinylique C) et de monomères a1) et/ou a2).
transformation de manière analogue aux polymères du copolymère de (méth)acrylate A), avec au moins un composé B) qui est sélectionné parmi des anhydrides de l'acide carboxylique,
pour donner un copolymérisat AI) qui porte des groupes éthyliquement insaturés et des groupes ionogènes et/ou ioniques,
II) le cas échéant, transformation d'au moins une partie des groupes ionogènes du copolymérisat AI) en groupes ioniques et
III) dispersion du copolymérisat AI) dans un dispersant.

2. Procédé selon la revendication 1, dans lequel le copolymère de (méth)acrylate A) mis en oeuvre dans l'étape I) présente un poids moléculaire à moyenne pondérée dans un domaine de 1500 à 6000.

3. Procédé selon la revendication 1, dans lequel le composé B) est sélectionné parmi l'anhydride de l'acide glutarique, l'anhydride de l'acide succinique et leurs mélanges.

4. Procédé selon l'une des revendications qui précèdent, dans lequel dans l'étape I), on met en oeuvre un copolymère de (méth)acrylate, qui porte au moins un monomère a1), avec un radical de la formule
CH₂ = C (R) -C (=O) -
où R = H ou CH₃, et qui porte un groupe fonctionnel capable d'une réaction de condensation ou d'addition, à intégration du polymère, le monomère a1) étant sélectionné parmi les esters de l'acide acrylique et de l'acide (méth)acrylique avec des alcanediols en C₂-C₃₀, les amides de l'acide méthacrylique avec des aminoalcools en C₂-C₃₀, la (méth)acroléine, le (méth)acrylamide, l'acide (méth)acrylique, le (méth)acrylate glycidylique et leurs mélanges.

5. Procédé selon l'une des revendications qui précèdent, le copolymère de (méth)acrylate A) mis en oeuvre dans l'étape I) pouvant être obtenu par :
i) polymérisation radicalaire d'un mélange monomère, comprenant :
a1) 20 à 85% mol. d'au moins un monomère avec un radical de la formule
CH₂ = C (R) -C (=O) -
où R représente H ou CH₃,
a2) 15 à 80% mol. d'au moins un monomère radicalairement polymérisable différent de a1),
dans lequel, par rapport à la quantité totale des monomères a1) et a2), 5 à 50% mol. des monomères a1) et/ou a2) portent un groupe fonctionnel qui est capable d'une réaction de condensation ou d'addition pour donner un copolymérisat Ai),
ii) transformation de manière analogue aux polymères du copolymérisat Ai) avec au moins un composé éthyléniquement insaturé C), qui porte en outre au moins un groupe fonctionnel complémentaire aux groupes fonctionnels des monomères a1) et/ou a2) capables d'une réaction de condensation ou d'addition pour donner un copolymère de (méth)acrylate A).

6. Procédé selon la revendication 1, dans lequel la polymérisation est exécutée dans l'étape i) dans un réacteur à espace annulaire.

7. Dispersion polymère durcissable par rayonnement au moyen d'un rayonnement actinique, qui peut être obtenu par un procédé selon l'une des revendications 1 à 6.

8. Moyen d'enduction durcissable par rayonnement au moyen d'un rayonnement actinique, comprenant :
- au moins une dispersion polymère selon la revendication 7,
- le cas échéant, au moins un autre oligomère ou polymère avec au moins une liaison double éthyléniquement insaturée et,
- le cas échéant au moins un additif.

9. Moyen d'enduction selon la revendication 8, comprenant comme additif 0,1 à 5% en poids d'au moins un photoinitiateur qui peut initier la polymérisation de liaisons doubles éthyléniquement insaturées.

10. Procédé pour la préparation d'un substrat enduit, dans lequel :
- on applique sur la surface du substrat une dispersion polymère selon la revendication 7 ou un moyen d'enduction selon la revendication 8,
- la dispersion polymère appliquée sèche à des températures élevées, et
- la dispersion polymère séchée durcit par rayonnement avec des rayons UV ou électroniques.

11. Procédé selon la revendication 10, dans lequel on met en oeuvre un substrat avec une surface en métal, bois, plastique, papier ou cuir.

12. Substrat enduit, qui peut être obtenu par un procédé selon les revendications 10 ou 11.

13. Utilisation de la dispersion polymère selon la revendication 7 dans un(des) ou comme moyen(s) d'enduction.
